# EUROPEAN PATENT APPLICATION

(11) **EP 1 761 026 A1**
(43) Date of publication of application: **07.03.2007**
(21) Application number: 06114470.5
(22) Date of filing: 24.05.2006
(51) Int. Cl.: H04N 1/00, G06F 3/12

(54) **Image forming system, image forming apparatus and program thereof**

(30) Priority: 30.08.2005 JP 2005249775
(71) Applicant: KONICA MINOLTA BUSINESS TECHNOLOGIES, INC., Tokyo 100-0005 (JP)
(72) Inventor: Yokobori, Jun c/o Konica Minolta Business, Hachioji-shi Tokyo 192-8505 (JP); Yamaguchi, Hiroshi c/o Konica Minolta Business, Hachioji-shi Tokyo 192-8505 (JP); Sato, Junji c/o Konica Minolta Business, Hachioji-shi Tokyo 192-8505 (JP)
(74) Representative: Gille Hrabal Struck Neidlein Prop Roos

(57) **Abstract**

There is described an image forming system constituted by an image forming apparatus and an external apparatus. The image forming apparatus includes a storing section to store image data, an image forming section and a controlling section to control the image forming operations. While, the external apparatus includes a data generating section to generate a plurality of print data sets, which are different from each other with respect to at least a part of each print data set, a selecting section to select selected-image data from the image data and a transmitting section to transmit the plurality of print data sets and selecting information indicating the selected-image data to the image forming apparatus. Based on the selecting information, the controlling section controls the image forming section so as to couple the selected-image data with each of print data sets to output coupled-image data.

## Description

This application is based on Japanese Patent Application NO. 2005-249775 filed on August 30, 2005 in Japanese Patent Office, the entire content of which is hereby incorporated by reference.

### BACKGROUND OF THE INVENTION

The present invention relates to an image forming system, an image forming apparatus and a program thereof, wherein the image data stored in advance and print data are coupled and outputted.

Generally, in an image forming apparatus such as a copying machine and printer, a plurality of image data sets are coupled and outputted. For example, when the jobs stored in an image forming apparatus are to be coupled and outputted as one job, evaluation is made based on the job attribute to see if these jobs can be coupled or not. If they cannot be coupled, information is notified that these jobs cannot be coupled, in such a way that part or whole of the attributes of the jobs to be coupled is removed by the operation of an operator or is modified to enable coupling of these jobs. Such a technique has been proposed (Patent Document 1).

Another proposal is an image forming apparatus wherein a mixture of the image data inputted from the image input apparatus such as a scanner and the electronic data inputted from an external apparatus is outputted (Patent Document 2).
[Patent Document 1]
   Tokkai 2003-177879 (Japanese Non-Examined Patent Publication)
[Patent Document 2]
   Tokkai 2000-289285 (Japanese Non-Examined Patent Publication)

However, when a printed piece is to be created by coupling a common image data with respect to a plurality of data sets partly different in destination and others, a printing instruction must be given every time, i.e. to each of the plurality of data sets partly different and common image data, with the result that productivity will decline.

### SUMMARY OF THE INVENTION

To overcome the abovementioned drawbacks in conventional image forming systems, it is an object of the present invention to provide an image forming system, an image forming apparatus and a program thereof, wherein productivity in producing printed pieces can be improved.

Accordingly, to overcome the cited shortcomings, the abovementioned object of the present invention can be attained by image forming systems described as follow.

An image forming system, comprising:
an image forming apparatus that includes a storing section to store image data, an image forming section to conducts image forming operations and a controlling section to control said image forming operations conducted by said image forming section; and
an external apparatus that includes a data generating section to generate a plurality of print data sets, which are different from each other with respect to at least a part of each print data set, a selecting section to select selected-image data to be coupled to each of said plurality of print data sets from said image data stored in said storing section and a transmitting section to transmit said plurality of print data sets and selecting information indicating said selected-image data to said image forming apparatus;
wherein, based on said selecting information, said controlling section controls said image forming section so as to couple said selected-image data with each of said plurality of print data sets to output coupled-image data.

An image forming apparatus, comprising:
a storing section to store image data;
an image forming section to conduct image forming operations;
a receiving section to receive a plurality of print data sets, which are different from each other with respect to at least a part of each print data set, and selecting information indicating selected-image data, which are selected from said image data stored in said storing section so as to be coupled to each of said plurality of print data sets, from an external apparatus; and
a controlling section to control said image forming section, based on said selecting information, so that said selected-image data are coupled with each of said plurality of print data sets to output coupled-image data.

A computer program, comprising functional steps of:
storing image data into a storing section;
conducting image forming operations;
receiving a plurality of print data sets, which are different from each other with respect to at least a part of each print data set, and selecting information indicating selected-image data, which are selected from said image data stored in said storing section so as to be coupled to each of said plurality of print data sets, from an external apparatus;
controlling said image forming section, based on said selecting information, so that said selected-image data are coupled with each of said plurality of print data sets to output coupled-image data.

A computer program, comprising the functional steps of:
generating a plurality of print data sets, which are different from each other with respect to at least a part of each print data set;
selecting selected-image data to be coupled to each of said plurality of print data sets from image data stored in a storing section of an image forming apparatus;
transmitting said plurality of print data sets and selecting information indicating said selected-image data to said image forming apparatus

### BRIEF DESCRIPTION OF THE DRAWINGS

Embodiments will now be described, by way of example only, with reference to the accompanying drawings which are meant to be exemplary, not limiting, and wherein like elements are numbered alike in several Figures, in which:
Fig. 1 is a system block diagram representing an image forming system 1 as an embodiment of the present invention;
Fig. 2 is a cross-sectional block diagram of the image forming apparatus 100;
Fig. 3 is a block diagram representing the internal structure of the image forming apparatus 100;
Fig. 4 is a block diagram representing the internal structure of a PC 200;
Fig. 5 shows an example of a database of customer data;
Fig. 6 (a) is a diagram showing the overview of the embodiment of the present invention, while Fig. 6 (b) is a conceptual diagram representing the image to be outputted from the image forming apparatus 100;
Fig. 7 is a flowchart showing a coupled printing instruction process A to be executed by the PC 200;
Fig. 8 shows an example of display on a print instruction screen 31;
Fig. 9 shows an example of display on a property screen 33;
Fig. 10 shows an example of display on a coupling screen setup screen 33;
Fig. 11 is a flowchart representing coupled printing executed by the image forming apparatus 100; and
Fig. 12 is a flowchart representing a coupled printing instruction process B to be executed by the PC 200 in the variation example.

### DETAILED DESCRIPTION OF THE PREFERRED EMBODIMENT

The following describes the image forming system 1 as an embodiment of the present invention:

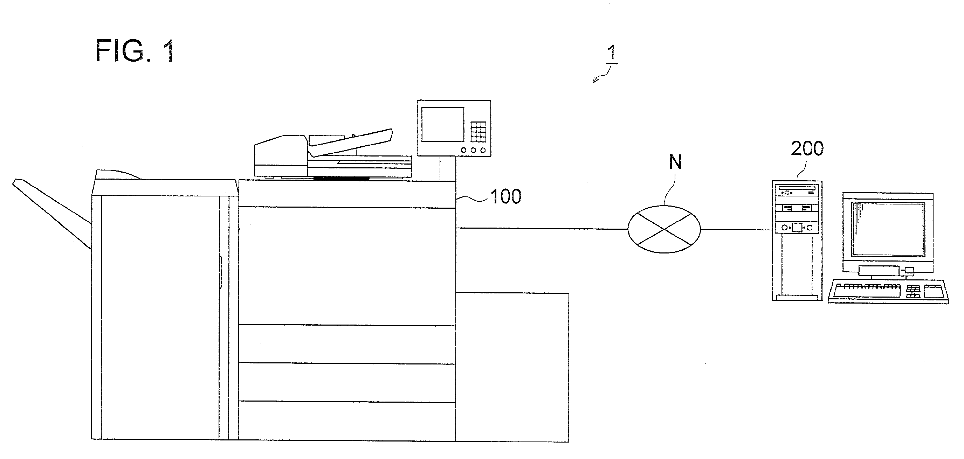

Fig. 1 shows the system structure of the image forming system 1. As shown in Fig. 1, an image forming apparatus 100 and an PC (personal computer) 200 as an external device are connected communicatably via a communication line N. The PC 200 provides printing instructions to the image forming apparatus 100.

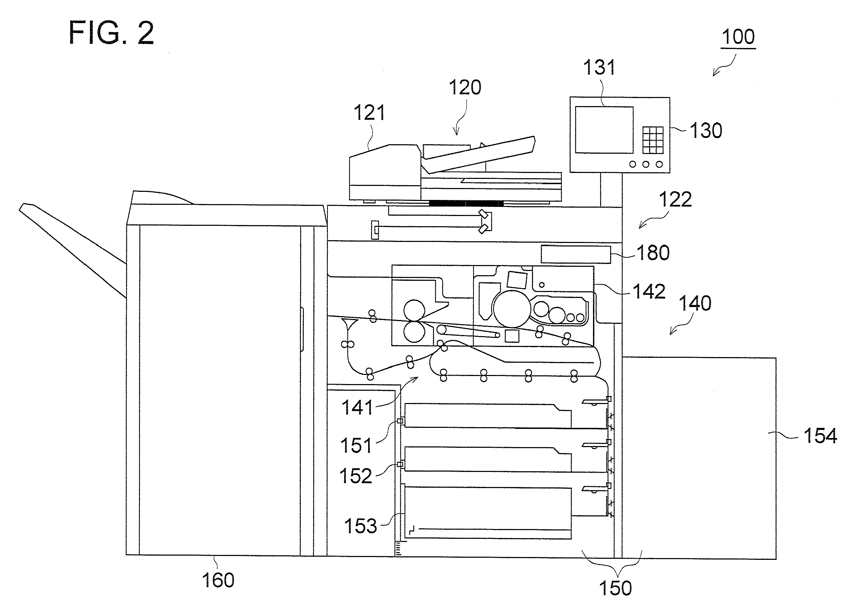

Fig. 2 shows a cross-sectional structure of the image forming apparatus 100.

As shown in Fig. 2, the image forming apparatus 100 is made up of an image reading section 120, an operation section 130, a printer 140, a sheet feed unit 150, a finishing unit 160 and a hard disk 180 (hard disk drive).

The image reading section 120 is provided with an ADF (Automatic Document Feeder) 121 as an automatic document feeding mechanism and a scanner 122. The ADF 121 feeds out the document placed on the document platen, and conveys it to the scanner 122. The scanner 122 provides optical scanning of the document having been conveyed. The document image is read out after photoelectric conversion by a CCD line image sensor.

Image processing of various types is applied to the document image data having been read by the image reading section 120, and the image data is sent to the printer 140 as the print image data.

The operation section 130 is made up of a display section 131; a touch panel arranged to cover the display section 131; and buttons of various functions including a numeral button and a start button for specifying the start of printing. The display section 131 contains a LCD (liquid crystal display) to display various operation screens and results of processing.

The printer 140 forms an image on printing paper according to the electrophotographic technology. It incorporates a conveyance mechanism 141 for conveying the printing paper fed from the sheet feed unit 150, and an image forming section 142 for forming image on the printing paper. The image forming section 142 contains: a photoconductor drum as an image carrier; a charger for charging the photoconductor drum; an exposure section for providing exposure and scanning on the surface of the photoconductor drum based on the image; a developing section for attaching toner to the photoconductor drum; a transfer section for transferring the toner image formed on the photoconductor drum, onto the printing paper; a cleaning section for removing the residual toner remaining on the photoconductor drum; and a fixing section for fixing the toner image formed on the printing paper.

The sheet feed unit 150 is equipped with four sheet feed trays; sheet feed trays 151 through 154. However, it is to be understood that the number of sheet feed trays is not restricted to four. The sheet feed trays 151 through 154 each are capable of storing different types of paper, such as plain paper, backing paper, recycled paper and bond paper, having different dimensions.

The finishing unit 160 applies various forms of processing -- such as sorting, punching, stapling and folding (folding paper in two, three and four or in the shape of a letter Z) -- to the printing paper with an image formed thereon, whereby a booklet is created and book binding is performed.

The hard disk 180 stores the image data read by the image reading section 120 and the image data received from an external device. The storage structure of the hard disk drive 180 is designed in a hierarchical structure of a box layer and file layer. Immediately below the root direction located at the highest position of the hierarchy, one or ore folders are formed as a box layer. In the following description, the name of the folder in the boxer layer will be the box name. An image data file as a file layer is stored in the low-level hierarchy of the box layer.

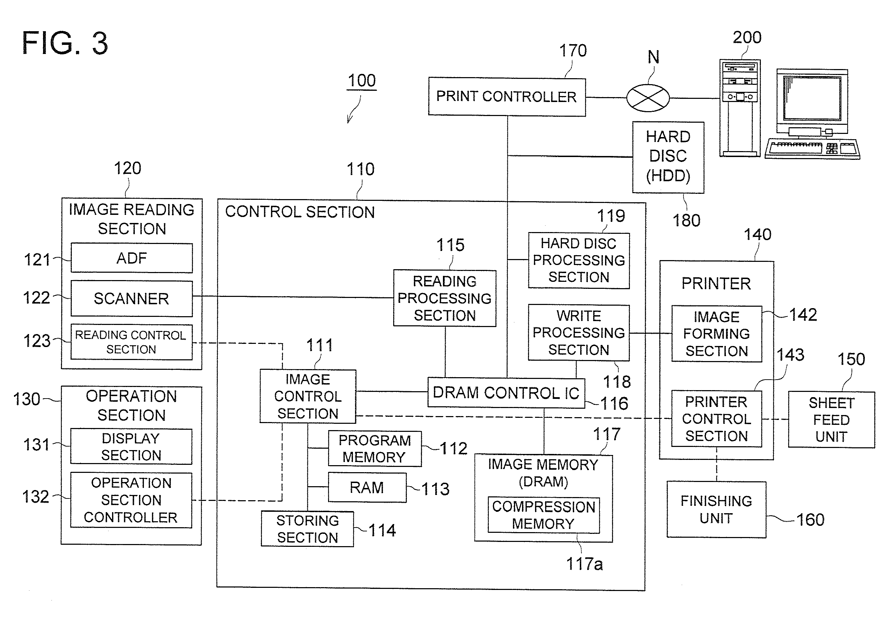

The following describes the internal structure of the image forming apparatus 100 with reference to Fig. 3.

As shown in Fig. 3, the image forming apparatus 100 is made up of a control section 110, image reading section 120, operation section 130, printer 140, sheet feed unit 150, finishing unit 160, print controller 170 and hard disk 180. The same portions as those described with reference to Fig. 2 will be assigned with the same numerals of reference, and will not be described to avoid duplication.

The control section 110 contains an image control section 111, program memory 112, RAM (Random Access Memory) 113, storing section 114, reading processing section 115, DRAM control IC 116, image memory 117, write processing section 118 and hard disk processing section 119.

The image control section 111 is made up of a CPU (Central Processing Unit) and others. It reads out the programs for various forms of processing stored in the program memory 112 and provides centralized control of the processing operations in each section of the image forming apparatus 100 through collaboration with the program.

The image control section 111 allows each of a plurality of print data sets received from the PC 200 to be coupled with the image data in the hard disk 180 selected in the PC 200, and outputs such data.

The program memory 112 stores the programs for various forms of processing related to printing by the image forming apparatus 100.

The RAM 113 provides a work area for temporarily storing various programs to be executed by the image control section 111 and the data related to these programs.

The storing section 114 is made up of a nonvolatile memory and others, and stores various data sets.

The reading processing section 115 applies processing of shading correction and A/D conversion to the analog image signal inputted from the scanner 122 of the image reading section 120, whereby digital image data is generated. The generated image data is outputted to the DRAM control IC 116.

The DRAM control IC 116 applies processing of compression/decompression to the image data according to the instruction from the image control section 111, and controls the input/output of the image data to the image memory 117. For example, when an instruction has been issued to read the image data has been specified, the DRAM control IC 116 applies processing of compression to the image data inputted from the reading processing section 115 and stores the data into the compression memory 117a of an image memory 117. When an instruction is given to print and output, the image data, the DRAM control IC 116 reads the compressed image data from the compression memory 117a and decompresses it, whereby the data is sent to the write processing section 118.

The image memory 117 is made up of a DRAM (Dynamic Random Access Memory), and is equipped with a compression memory 117a. The compression memory 117a is used to store the compressed image data.

The write processing section 118 generates printing image data for image formation, based on the image data inputted from the DRAM control IC 116, and outputs it to the printer 140.

The hard disk processing section 119 controls the reading/saving of the image data, creation of a folder and the specified sequence (IDE: Integrated Drive Electronics, etc.) for accessing the hard disk 180. When an instruction is given to save the image data in the hard disk 180, the hard disk processing section 119 allows the DRAM control IC 116 to read out the compressed image data stored in the compression memory 117a of the image memory 117, whereby the compressed image data having been read out is saved in the hard disk 180. Further, when an instruction is given to read out the image data from the hard disk 180, the hard disk processing section 119 reads out the compressed image data stored in the hard disk 180, whereby the compressed image data having been read out is stored into the compression memory 117a.

The image reading section 120 includes an ADF 121, scanner 122 and read control section 123. The read control section 123 controls the ADF 121 and scanner 122 according to the instruction from the image control section 111, so that the document surface is subjected to optical scanning. The analog image signal having been read out is sent to the reading processing section 115 of the control section 110.

The operation section 130 incorporates a touch panel integrally structured with the display section 131, various function buttons, and an operation section controller 132. The operation section controller 132 sends the operation signal operated by various function buttons or touch panel, to the image control section 111. The operation section controller 132 allows various operation screens and results of various forms of processing to be displayed on the display section 131, according to the instruction from the image control section 111.

The printer 140 is equipped with various printing-related sections such as the image forming section 142, and printer control section 143. The printer control section 143 operates various sections of the printer 140 according to the instruction from the image control section 111, and allows an image to be formed on printing paper, based on the image data inputted from the write processing section 118.

The sheet feed unit 150 is equipped with sheet feed trays 151 through 154 shown in Fig. 2. The finishing unit 160 applies various forms of processing to the printing paper with an image formed thereon, outputted from the printer 140.

The print controller 170 converts the print data received from the PC 200 via the communication line N such as LAN (Local Area Network), so that it can be formed into an image, and sends it to the DRAM control IC 116.

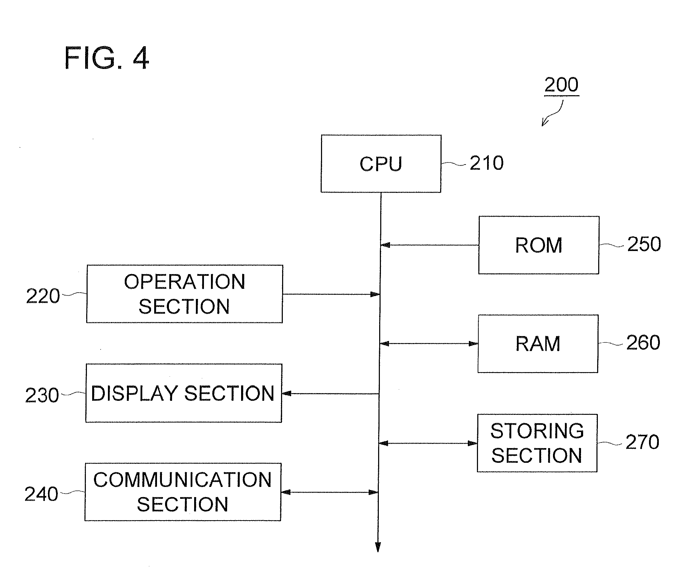

The following describes the internal structure of the PC 200 with reference to Fig. 4.

As shown in Fig. 4, the PC 200 contains a CPU 210, operation section 220, display section 230, communication section 240, ROM (Read Only Memory) 250, RAM 260 and storage section 270.

The CPU 210 reads out the program stored in the ROM 250 and storage section 270 according to the operation signal inputted from the operation section 220, executes processing according to the program. Then the result of processing is displayed on the display section 230.

The CPU 210 generates a plurality of print data sets different from each other at least partly, these data sets being a plurality of jobs to be conducted continuously. The job in the sense in which it is used in the present embodiment refers to a sequence of operations ranging from the start of printing to the termination. A plurality of jobs to be conducted continuously refers to a plurality of sequential jobs. In the present embodiment, based on one printing instruction by the user, for example, as will be described later, a plurality of print data sets partly different from each other is sent to the image forming apparatus 100 from the PC 200 as a sequence of jobs, although these jobs are different from each other.

The operation section 220 is provided with a keyboard having a cursor key, ten-keypad and various function keys, and a pointing device such as a mouse, and transmits the depression signal of the depressed key and the operation signal of the mouse to the CPU 210. The operation section 220 selects the image data capable of being coupled with the print data, from the image data stored in the hard disk 180 of the image forming apparatus 100.

The display section 230 is made up of a CRT (cathode ray tube) and LCD, and displays various screens, based on the display data inputted from the CPU 210.

The communication section 240 is a functional portion connected to the communication line N to exchange data with the image forming apparatus 100. It incorporates a modem, LAN interface and USB.

The ROM 250 is made up of a nonvolatile semiconducting memory and stores the system and program and data to be executed by the CPU 210.

The RAM 260 is a work area for temporarily storing the programs to be executed by the CPU 210 and the data related to the program.

The storage section 270 is made up of the storage medium such as a hard disk and stores the data processed by the application program and various processing programs. Further, the storage section 270 stores a plurality of formats and databases used for variable printing.

Variable printing can be defined as the technique of printing by replacing part of the contents of a printed piece. The printing format refers to the common format of each print data when generating a plurality of continuous print data sets partly different from each other. For example, it refers to the format of the text as the cover of a direct mail.

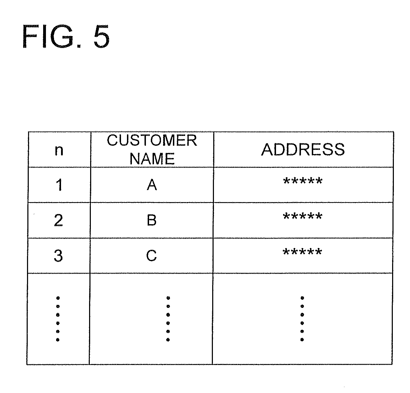

Fig. 5 shows an example of the database of a customer data such as a direct mail. Customer names and addresses are stored in the database, and are managed by the continuous serial number (n). The customer names and addresses correspond to the different data sets. The different data is the data corresponding to the "part" when generating "a plurality of print data sets, which are different from each other with respect to at least a part of each print data set".

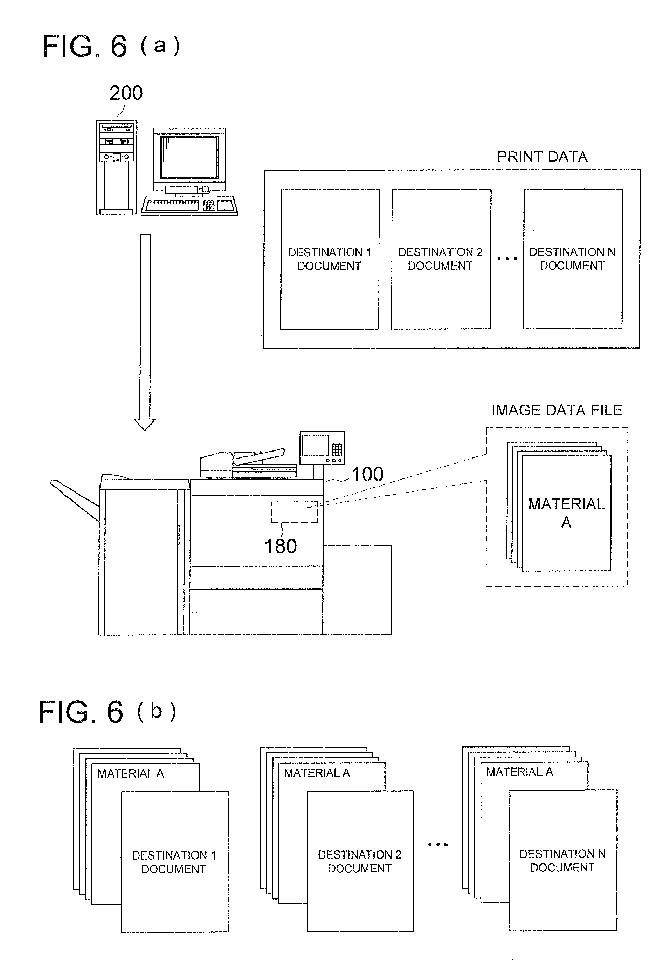

The following describes the overview of the embodiment of the present invention with reference to Figs. 6 (a) and (b): The present invention can be used when distributing a common material to a plurality of addresses. As shown in Fig. 6 (a), a plurality of print sets, different from each other with respect to at least a part of each print data set, containing document data common to each of the data sets, and the selection information (file name data) showing the image data selected in the PC 200 out of the image data stored in the hard disk 180 of the image forming apparatus 100 are transmitted from the PC 200 to the image forming apparatus 100. The plurality of print data sets are transmitted as a plurality of continuous jobs. In Fig. 6 (a), in a plurality of print data sets, only the "destination" is different and other "documents" are common. However, all the print data sets can be different from each other, for example. Further, all the data sets can contain only the data sets each having different destination. Fig. 6 (b) is a conceptual diagram showing an image outputted by the image forming apparatus 100. Each of print data sets is coupled with selected image data and is outputted.

The following describes the operation of the image forming system 1.

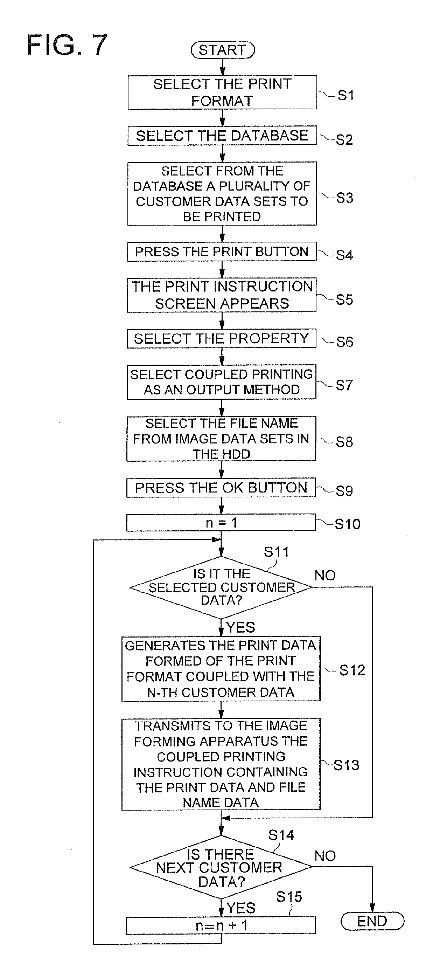

Referring to Fig. 7, coupled printing instruction processing A to be executed by the PC 200 will be explained. In the coupled printing instruction processing A, a coupled printing instruction is transmitted to the image forming apparatus 100 from the PC 200. This is done through the collaboration of the CPU 210 and the program stored in the ROM 250.

In the PC 200, the application for variable printing is started. Then, out of a plurality of print formats stored in the storage section 270, a print format is selected by the user operating the operation section 220 (Step S1).

The database for variable printing is selected out of a plurality of databases stored in the storage section 270 by the user operating the operation section 220 (Step S2). A plurality of the customer data sets to be printed are selected from the selected database (Step S3).

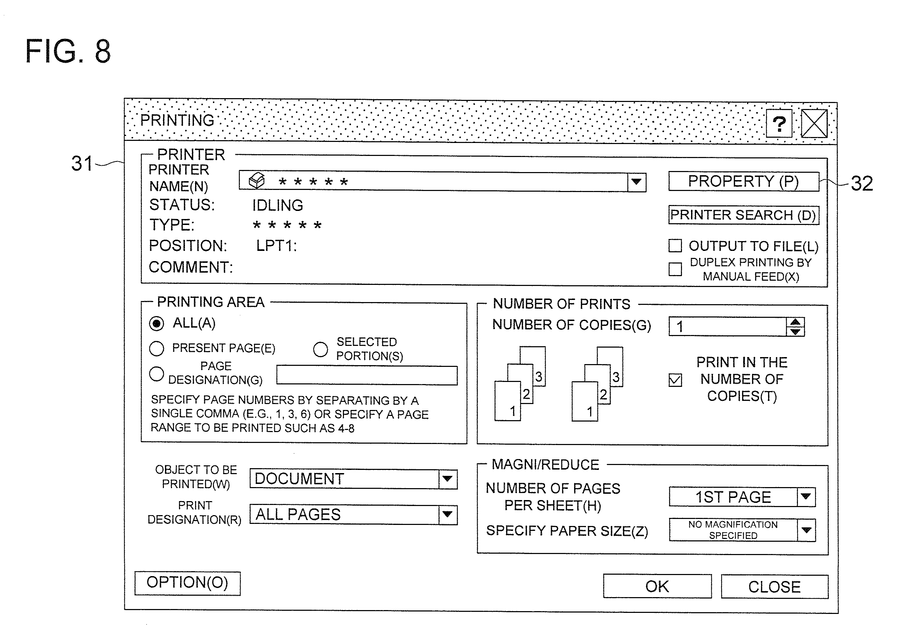

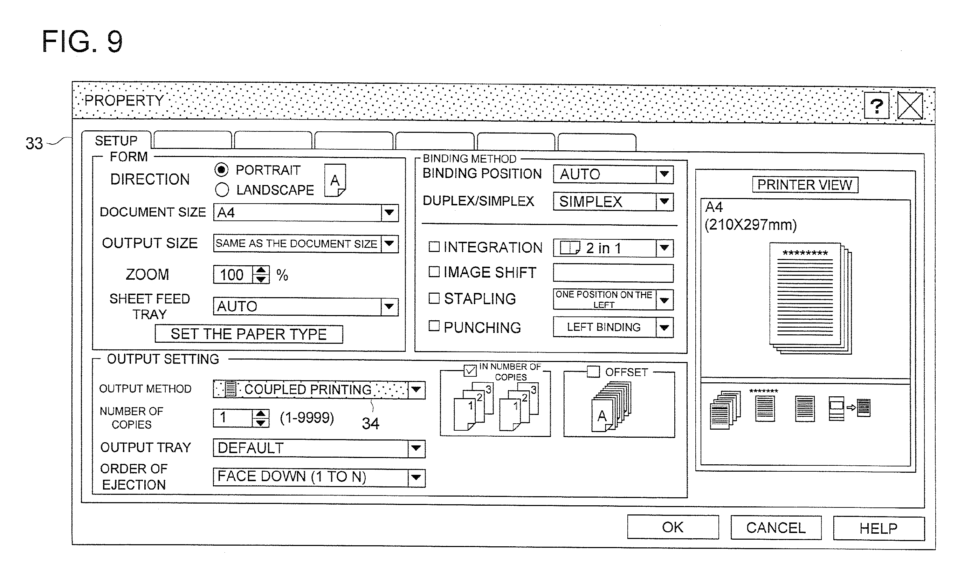

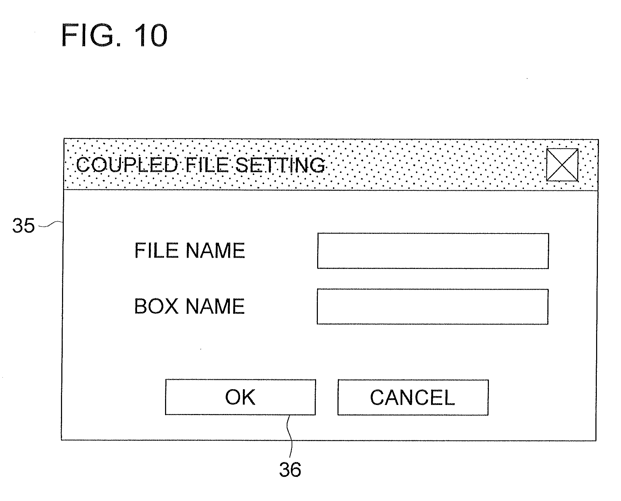

When the print button displayed on the display section 230 is pressed by the operation of the operation section 220 (Step S4), the print instruction screen 31 shown in Fig. 8 is displayed on the display section 230 (Step S5). When the "property" 32 has been selected on the print instruction screen 31, (Step S6), the property screen 33 shown in Fig. 9 is displayed on the display section 230. When the "coupled printing" is selected from the pull down menu in the output procedure setting area 34 (Step S7), the coupled file setting screen 35 shown in Fig. 10 appears on the display section 230.

On the coupled file setting screen 35, the file name of the data to be coupled with the print data is selected out of the image data in the hard disk 180 of the 100 by the user operating the operation section 220 (Step S8). To put it more specifically, the name of the box storing the image data to be coupled with the print data and the file name thereof are inputted on the coupled file setting screen 35. The following description refers to the case where image data is specified in terms of the box name and file name. It is sufficient to use the method according to the directory structure in the hard disk 180 of the image forming apparatus 100.

When the OK button 36 is pressed by the operation of the operation section 220 on the coupled file setting screen 35 (Step S9), the print data starts to be generated.

In the first place, the serial number of the database is set to n = 1 (Step S10). Then a decision step is taken to determine if the n-th customer data set is the customer data selected in Step S3 or not (Step S11). If the n-th customer data set is the customer data selected in Step S3 (YES in Step S11), a print data formed of the print format coupled with the n-th customer data is produced (Step S12). The coupled printing instruction including the print data and the file name data denoting the file name selected in the Step S8 is transmitted to the image forming apparatus 100 via the communication section 240 (Step S13). To put it more specifically, the file name data and coupling/no-coupling instruction information are recorded on the header of the print data. The coupling/no-coupling instruction information refers to the information that shows if the print data and the image data in the hard disk 180 of the image forming apparatus 100 is to be coupled or not.

After Step S13 or when the n-th customer data is not the customer data selected in the Step S3 (NO in Step S11), a decision is made to see if there is next customer data (Step S14). If there is next customer data (YES in Step S14), "n" is incremented by 1 (Step S15), and the system goes back to the step S11. In this way, print data sets containing the print formats coupled with n-th customer data are produced one after another, and are sent to the image forming apparatus 100.

If there is no next customer data in Step S14 (NO in Step S14), coupled printing instruction processing A terminates.

As described above, a plurality of print data sets partly different from each other is sent to the image forming apparatus 100 by the one-time operation instruction given by the user, as a sequence of jobs, although these jobs are different from each other. This arrangement ensures a substantial reduction in the user's time and labor, and coupling between a plurality of print data set partly different from each other and image data stored in the image forming apparatus 100.

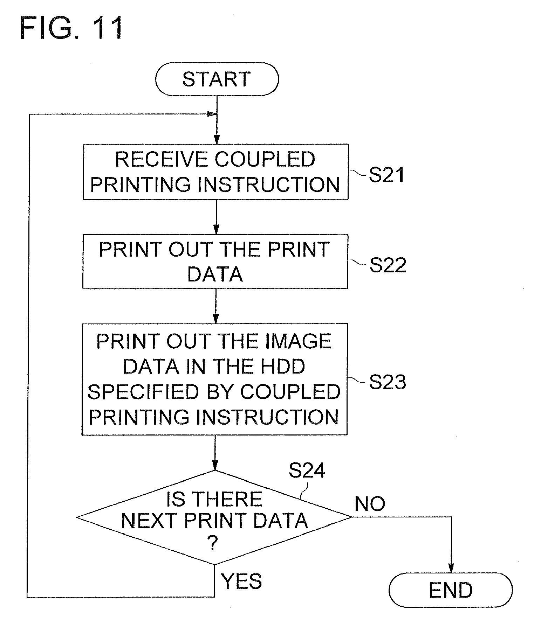

The following describes the coupled printing instruction of the image forming apparatus 100 with reference to Fig. 11. Coupled printing instruction can be defined as processing of printing by coupling the print data and image data in the hard disk 180 having been selected, based on the coupled printing instruction received from the PC 200. This is done through collaboration between the CPU of the image control section 111 and the program stored in the program memory 112.

Upon receipt of the coupled printing instruction containing the print data and file name data from the PC 200 (Step S21), print data is printed by the image forming section 142 (Step S22). This is followed by the step of printing the image data in the hard disk 180 of coupled printing instruction (Step S23).

If there is next print data (YES in Step S24), the system goes back to Step 21 and the Steps S21 through S23 are repeated.

If there is no next print data in Step S24 (NO in Step S24), coupled printing instruction processing terminates.

As described above, the image forming system 1 allows the PC 200 to transmit the coupled printing instruction containing the print data and file name data to the image forming apparatus 100 successively. Further, the image forming apparatus 100 is capable of coupling each of a plurality of print data sets with the image data stored in the hard disk 180 and transmitting them. This arrangement eliminates the need of issuing printing instruction to each of the sections to which a plurality of print data and common image data stored in the hard disk 180 are transmitted.

The PC 200 couples the printing format with a plurality of customer data sets, automatically generates a plurality of print data sets. This reduces the user's time and labor as compared to the case wherein the user manually inputs the customer data.

### <Variation>

The following describes the variations of the image forming system 1:

In the aforementioned embodiment, printing is specified on the print instruction screen displayed on the display section of the PC 200. In the special-purpose machine used in a printing shop, the application having a printer driver function is used to give a printing instruction from the application.

The image forming apparatus as an example of variation has the same structure as the image forming system 1 shown with reference to the aforementioned embodiment.
Accordingly, the same portions will be assigned with the same numerals of reference, and the structure will not be described to avoid duplication. The following describes the processing characteristic of the variation:

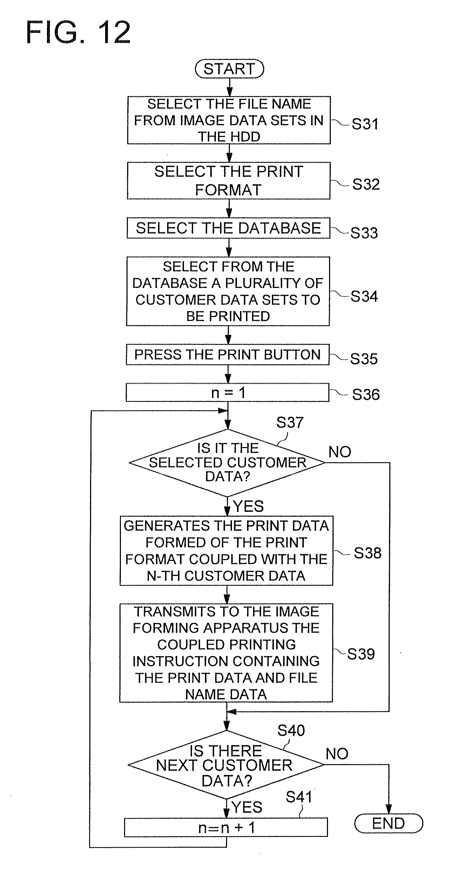

Fig. 12 is a flowchart showing a coupled printing instruction process A to be executed by the PC 200. In the coupled printing instruction processing B, a coupled printing instruction is transmitted to the image forming apparatus 100 from the PC 200. This is done through the collaboration of the CPU 210 and the program stored in the ROM 250.

The file name of the image data to be coupled with the print data is selected out of the image data in the hard disk 180 of the 100 by the user operating the operation section 220 (Step S31).

Then a print format is selected out of the print formats stored in the storage section 270 by the user operating the operation section 220 (Step S32). The database for variable printing is selected out of the databases stored in the storage section 270 by the user operating the operation section 220 (Step S33). A plurality of the customer data sets to be printed are selected from the selected database (Step S34).

When the print button displayed on the display section 230 is pressed by the operation of the operation section 220 (Step S35), print data starts to be produced.

In the first place, the serial number of the database is set to n = 1 (Step S36). Then a decision step is taken to determine if the n-th customer data set is the customer data selected in Step S34 or not (Step S37). If the n-th customer data set is the customer data selected in Step S34 (YES in Step S37), a print data formed of the print format coupled with the n-th customer data is produced (Step S38). The coupled printing instruction including the print data and the file name data denoting the file name selected in S31 is transmitted to the image forming apparatus 100 via the communication section 240 (Step S39).

After Step S39 or when it has been found out in Step S37 that the n-th customer data is not the customer data selected in the Step S34 (NO in Step S37), a decision is made to see if there is next customer data (Step S40). If there is next customer data (YES in Step S37), "n" is incremented by 1 (Step S41), and the system goes back to the step S37. In this way, print data sets containing the print formats coupled with n-th customer data are produced one after another, and are sent to the image forming apparatus 100.

If there is no next customer data in the Step S40 (NO in Step S40), coupled printing instruction processing B terminates.

Processing in the image forming apparatus 100 is the same as the coupled printing instruction described with reference to the aforementioned embodiment, and will not be described to avoid duplication.

In the example of variation, the coupled printing instruction containing the print data and file name data can be transmitted from the PC 200 to the image forming apparatus 100 successively. Further, the image forming apparatus 100 is capable of coupling each of a plurality of print data sets with the image data stored in the hard disk 180 and transmitting them. This arrangement improves productivity in producing printed pieces.

The description of the aforementioned embodiment and variation refers to examples of the image forming apparatus of the present invention, without the prevent invention being restricted thereto. The detailed structure and detailed operations of various apparatuses constituting the image forming system can be adequately modified without departing from the spirit of the invention.

For example, the storage section for storing the image data can be such a storage medium as a DVD (Digital Versatile Disk) without being restricted to the hard disk 180.

According to the embodiment, the following effects can be attained.
(1) Since each of the plurality of print data sets is combined with the stored image data to output them, it becomes possible to improve the productivity when producing the printing products.
(2) Since each of the plurality of print data sets is combined with the image data stored in the hard disc to output them, it becomes possible to improve the productivity for producing the printing products.
(3) It becomes possible to handle the plurality of print data sets as a plurality of consecutive jobs.
(4) It becomes possible to reduce labor hour of the user, compared to the case in which the user manually inputs a plurality of data sets being different from each other.
(5) Since both the plurality of print data sets and the selection information indicating the image data to be combined are transmitted to the image forming apparatus, it becomes possible to improve the productivity when producing the printing products.

While the preferred embodiments of the present invention have been described using specific term, such description is for illustrative purpose only, and it is to be understood that changes and variations may be made without departing from the spirit and scope of the appended claims.

## Claims

1. An image forming system, comprising:
an image forming apparatus that includes a storing section to store image data, an image forming section to conducts image forming operations and a controlling section to control said image forming operations conducted by said image forming section; and
an external apparatus that includes a data generating section to generate a plurality of print data sets, which are different from each other with respect to at least a part of each print data set, a selecting section to select selected-image data to be coupled to each of said plurality of print data sets from said image data stored in said storing section and a transmitting section to transmit said plurality of print data sets and selecting information indicating said selected-image data to said image forming apparatus,
wherein, based on said selecting information, said controlling section controls said image forming section so as to couple said selected-image data with each of said plurality of print data sets to output coupled-image data.

2. The image forming system recited in claim 1, **characterized in that**
said storing section is a hard disk.

3. The image forming system recited in claim 1 or claim 2, **characterized in that**
each of said plurality of print data sets includes common data being common to said plurality of print data sets and different data being different form those of other print data sets.

4. The image forming system recited in any one of claims 1 - 3, **characterized in that**
said transmitting section transmits said plurality of print data sets to said image forming apparatus as a plurality of jobs to be conducted continuously.

5. The image forming system recited in any one of claims 1 - 4, **characterized in that**
said external apparatus further includes a memorizing section to memorize a plurality of different data, being different from each other and controlled by continuous serial numbers; and **characterized in that**,
based on said serial numbers, said data generating section generates said plurality of print data sets so that each of said plurality of print data sets includes one of said plurality of different data.

6. The image forming system recited in claim 5, **characterized in that**
said plurality of different data sets included in said plurality of print data sets are different from each other.

7. An image forming apparatus, **characterized by** comprising:
a storing section to store image data;
an image forming section to conduct image forming operations;
a receiving section to receive a plurality of print data sets, which are different from each other with respect to at least a part of each print data set, and selecting information indicating selected-image data, which are selected from said image data stored in said storing section so as to be coupled to each of said plurality of print data sets, from an external apparatus; and
a controlling section to control said image forming section, based on said selecting information, so that said selected-image data are coupled with each of said plurality of print data sets to output coupled-image data.

8. The image forming apparatus recited in claim 7, **characterized in that**
said storing section is a hard disk.

9. The image forming apparatus recited in claim 7 or claim 8, **characterized in that**
each of said plurality of print data sets includes common data being common to said plurality of print data sets and different data being different form those of other print data sets.

10. The image forming apparatus recited in any one of claims 7 - 9, **characterized in that**
said receiving section receives said plurality of print data sets from said external apparatus as a plurality of jobs to be conducted continuously.

11. A computer program, **characterized by** comprising functional steps of:
storing image data into a storing section;
conducting image forming operations;
receiving a plurality of print data sets, which are different from each other with respect to at least a part of each print data set, and selecting information indicating selected-image data, which are selected from said image data stored in said storing section so as to be coupled to each of said plurality of print data sets, from an external apparatus;
controlling said image forming section, based on said selecting information, so that said selected-image data are coupled with each of said plurality of print data sets to output coupled-image data.

12. The computer program recited in claim 11, **characterized in that**
each of said plurality of print data sets includes common data being common to said plurality of print data sets and different data being different form those of other print data sets.

13. The computer program recited in claim 11 or claim 12, **characterized in that**,
when executing said receiving step, said plurality of print data sets are received from said external apparatus as a plurality of jobs to be conducted continuously.

14. A computer program, **characterized by** comprising the functional steps of:
generating a plurality of print data sets, which are different from each other with respect to at least a part of each print data set;
selecting selected-image data to be coupled to each of said plurality of print data sets from image data stored in a storing section of an image forming apparatus;
transmitting said plurality of print data sets and selecting information indicating said selected-image data to said image forming apparatus

15. The computer program recited in claim 14, **characterized in that**
each of said plurality of print data sets includes common data being common to said plurality of print data sets and different data being different form those of other print data sets.

16. The computer program recited in claim 14 or claim 15, **characterized in that**,
when executing said transmitting step, said plurality of print data sets are transmitted to said image forming apparatus as a plurality of jobs to be conducted continuously.
